# EUROPEAN PATENT SPECIFICATION

(11) **EP 3 466 833 B1**
(45) Date of publication and mention of the grant of the patent: **01.12.2021**
(21) Application number: 18198512.8
(22) Date of filing: 03.10.2018
(51) Int. Cl.: B65D 57/00, B65B 23/20, B65D 85/48, B65G 49/06, B25J 9/02, B25J 15/00, B25J 15/06

(54) **HANDLING UNIT FOR GLASS SHEETS AND SPACER, HANDLING METHOD ASSOCIATED**
HANDHABUNGSEINHEIT FÜR GLASSCHEIBEN UND ABSTANDHALTER, VERFAHREN ZUR HANDHABUNG
UNITE DE MANUTENTION POUR FEUILLES DE VERRE ET INTERCALAIRE, PROCEDE DE MANUTENTION ASSOCIE

(30) Priority: 03.10.2017 IT 201700110679
(43) Date of publication of application: 10.04.2019
(73) Proprietor: Bottero S.p.A., 12100 Cuneo (IT)
(72) Inventor: PFEILSCHIFTER, Thomas, 86687 Kaisheim (DE); SCHRETZMEIR, Thomas, 86647 Lauterbach (DE); WÜRTH, Andreas, 86641 Rain (DE); GALLO, Enrico, 12100 Cuneo (IT)
(74) Representative: Bergadano, Mirko

(56) References cited:
- WO-A1-2016/178611
- CN-A- 103 171 893
- JP-A- 2010 208 641
- JP-A- 2016 013 874
- US-A1- 2014 347 619

## Description

### CROSS-REFERENCE TO RELATED APPLICATIONS

This patent application claims priority from Italian patent application no. 102017000110679 filed on 03/10/2017.

### TECHNICAL FIELD

The invention relates to a handling unit for glass sheets and a spacer, as well as a handling method.

### BACKGROUND ART

In the field of glass sheet moving and handling systems, a plurality of glass sheets or of stacks of glass sheets are usually piled up vertically or on inclined support devices, also known as stands. The stacked sheets are then picked up and transferred in sequence to processing machines or plants by means of motor-driven gripping and moving assemblies comprising suction-cup heads.

In some cases, the sheets of the stack of sheets are treated, for example in an autoclave, and subjected to controlled heating or cooling cycles so as to stabilize the glass sheets before picking them up and transferring them.

In both cases, between two consecutive sheets or two consecutive stacks of sheets there are interposed removable spacers in order to reduce the natural adhesion between the relative two adjacent sheets or the respective two stacks, thus making the pick-up operations easier. Besides, when glass sheets are subjected to a stabilization treatment, the spacers allow air to flow between two overlapping sheets or between two stacks of sheets, so as to enable the stabilization thereof.

For the purposes mentioned above, nowadays different types of spacers are used. Some of these spacers are manually picked up and handled, whereas others are picked up and handled by means of machines provided with dedicated gripping heads of the type having clamps or jaws, some others by means of the gripping heads with suction cups used to move the glass sheets.

In some cases, the dedicated gripping heads are associated with the suction gripping heads so as to move together with the suction gripping heads, whereas, in other cases, they are supported by the operating arm of the suction gripping heads.

With the aim of limiting, as much as possible, the dimensions of known glass sheet pick-up and moving plants and/or of simultaneously reducing the constructive and functional costs thereof, experiments have shown that the achievement of these objectives is strongly jeopardized both by the type of spacers used and by the way in which these spacers are positioned, picked up and transferred.

The gripping and moving of the spacers by means of a dedicated organ leads to an increase in the manoeuvring space needed and, hence, to an increase in the space taken up by the glass sheet gripping and moving plant.

Besides, the gripping and moving by means of dedicated gripping organs involves longer cycle times compared to the ones of mere sheet moving operations, as the pick-up steps are longer due to the fact that the positioning of the gripping organ requires a greater positioning precision.

The use of apparatuses dedicated to the gripping and moving of the spacers in parallel to the apparatuses with suction cups designed to pick up and move the glass sheets produces an increase both in the manufacturing costs and in the functional costs of the glass sheet gripping and moving plant, as well as in the total unloading time.

The suction gripping heads are mainly used to move tubular spacers, namely those consisting of a mesh of pipes. In case of metal pipes, in the area of each suction cup there are fitting zones for the suction cup itself.

Hence, these spacers are configured based on a specific distribution of the suction cups and can hardly adjust to a change in the distribution of the suction cups, which becomes necessary when the type of sheet to be transferred changes. The distribution of the suction cups basically is carried taking into account the distribution of the fitting zones of the spacer and this limits the possibility of distribution of the suction cups themselves or, if possible, changing the position of the fitting zones, thus actually changing the spacer.

Spacers are disclosed, for example, in WO 2016/178611 A1, JP2010208641A, CN103171893 A and JP 2016013874A.

A handling unit for glass sheets and a spacer, as well as a handling method, are disclosed in the prior art for example in JP2010208641A.

### DISCLOSURE OF INVENTION

The object of the invention is to provide a removable spacer, which can solve the problems discussed above in a simple and low-cost fashion and, in particular, can simplify the plants feeding glass sheets to the plants used to process said glass sheets.

According to the invention, there is provided a handling unit for glass sheets and a spacer as claimed in claim 1.

The invention further relates to a handling method as claimed in claim 11.

### BRIEF DESCRIPTION OF THE DRAWINGS

The invention will now be described with reference to the accompanying figures, which show a non-limiting embodiment thereof, wherein:
figure 1 is a perspective view of a spacer for glass sheets coupled to a suction moving apparatus;
figure 2 shows, on a much larger scale, a detail of the spacer of figure 1;
figure 3 shows a pick-up and moving plant for glass sheets and the spacer of figure 1; and
figure 4 shows a detail of figure 3 on a larger scale;

### BEST MODE FOR CARRYING OUT THE INVENTION

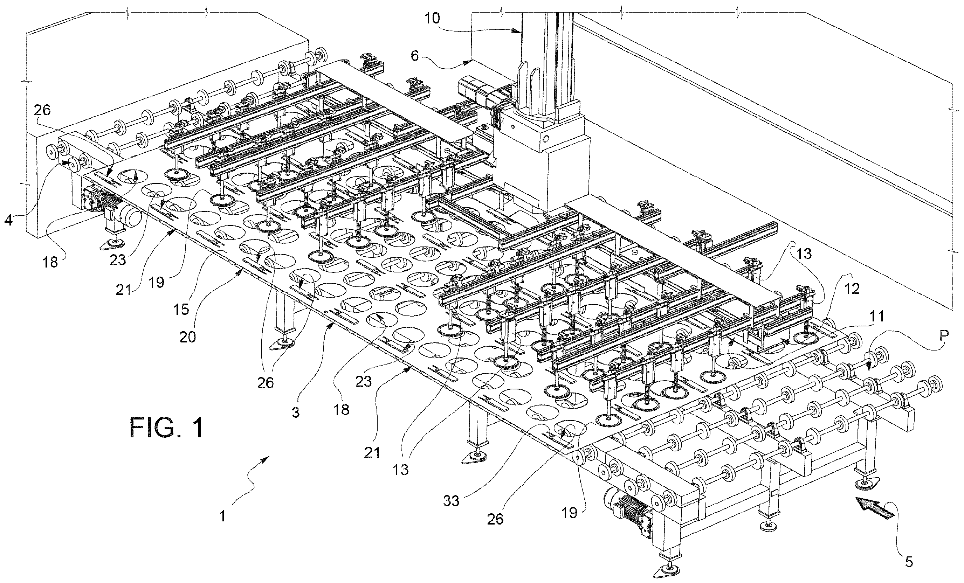

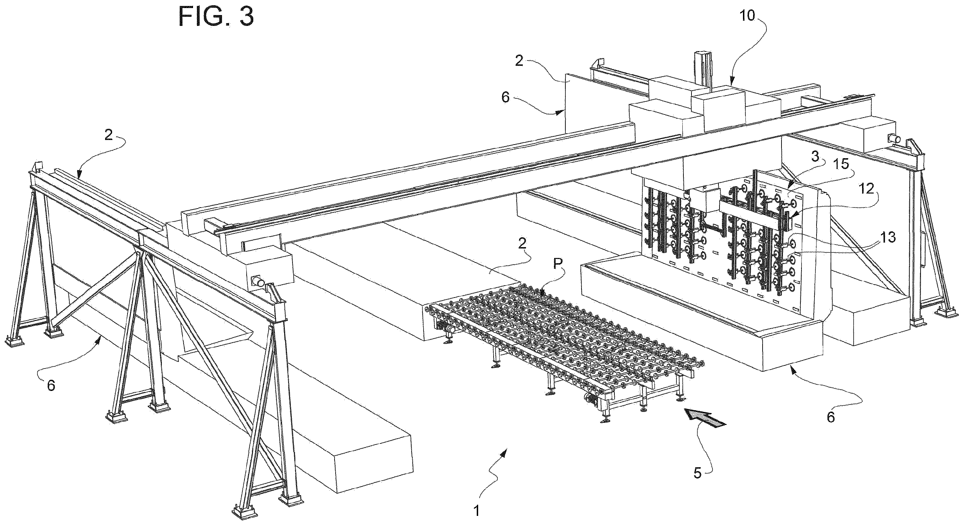

In figures 1, 3 and 4, number 1 indicates, as a whole, a gripping and moving unit to move, without distinctions, both one-piece and layered glass sheets 2 or spacers 3 designed to be interposed between two consecutive glass sheets 2 or between two overlapping stacks of glass sheets 2.

In the example described herein, the unit 1 comprises a wheel conveyor 4 - which is known and, therefore, not described in detail herein - defining a support and feeding plane P to support and feed both the glass sheets 2 and the spacers 3 in a direction 5, as well as a plurality of stands 6, three of them in the case shown herein, which are also known and are arranged on opposite sides of the conveyor 4 to support, without distinctions, stacks of glass sheets 2 interleaved with the spacers 3, common stack of glass sheets 2 separated from one another by spacers 3 or even stacks of spacers 3.

The unit 1 further comprises an overhead-crane gripping and moving device 10 for the glass sheets 2 and the spacers 3.

The device 10 comprises a suction gripping apparatus 11, which is known and, in turn, comprises a motor-driven bearing frame 12 coupled to a plurality of suction assemblies 13 to grip both the glass sheets 2 and the spacers 3.

To this aim, each spacer 3 comprises a metal plate 15. The plate conveniently has a rectangular shape and a thickness ranging from 1 to 5 millimetres. The plate preferably has a thickness of approximately 2 millimetres. The term "approximately" indicates a 10% thickness variation.

Each plate conveniently has outer dimensions that are equal to or round down the outer dimensions of the glass sheets 2. According to a variant which is not shown herein, each metal plate 15 has outer dimensions that are smaller than the ones of the glass sheets 2.

Each metal plate 15 has a plurality of circular through openings 18 distributed along the plate 15. The distribution of the openings 18 on the plate 15 is determined in such a way that the plate 15 has a stable shape and so as to create an alternation between the openings 18 and the solid portions 19 of the plate 15, so that, during the pick-up step, at least part of the solid portions 19 can be coupled to a relative suction assembly 13, regardless of the distribution of the suction assemblies on a suction gripping assembly. In the example described herein, each spacer 3 has a central portion 20 and two side portions 21; the central portion 20 has a greater density of through openings 18 compared to the one of the side portions 21. The different density of openings allows users to move and handle sheets with different geometries and different dimensions. In the spacers 3, the through openings 18 conveniently have the same diameter.

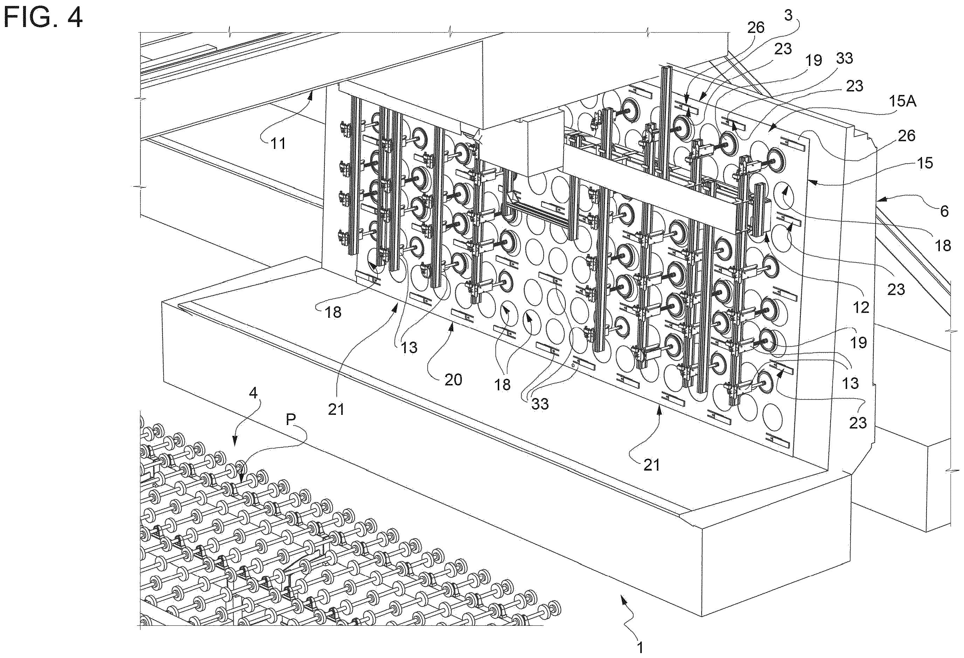

With reference to figures 1 and 4, each metal plate 15 further has a plurality of through openings 23, which conveniently - though not necessarily - have a rectangular shape.

Preferably, in each metal plate 15 the openings 23 are distributed along a ring following the peripheral edge of the plate 15 and along intermediate rows, in the case described herein three intermediate rows, parallel to one another and to a larger side of the metal plate 15 (figures 1 and 4).

Each one of the openings 23 houses an intermediate portion 25 of a respective spacer block 26 (figures 1, 2 and 4), which is made of an elastomer material or of glass fibre or of other equivalent materials designed to cooperate with the glass sheets 2 without scratching or scraping them.

Each spacer block 26 comprises a pair of abutment side portions 27 opposite one another, each of them projecting from a relative side surface 15A of the metal plate 15 and designed to be arranged, in use, so as to rest against a relative glass sheet 2.

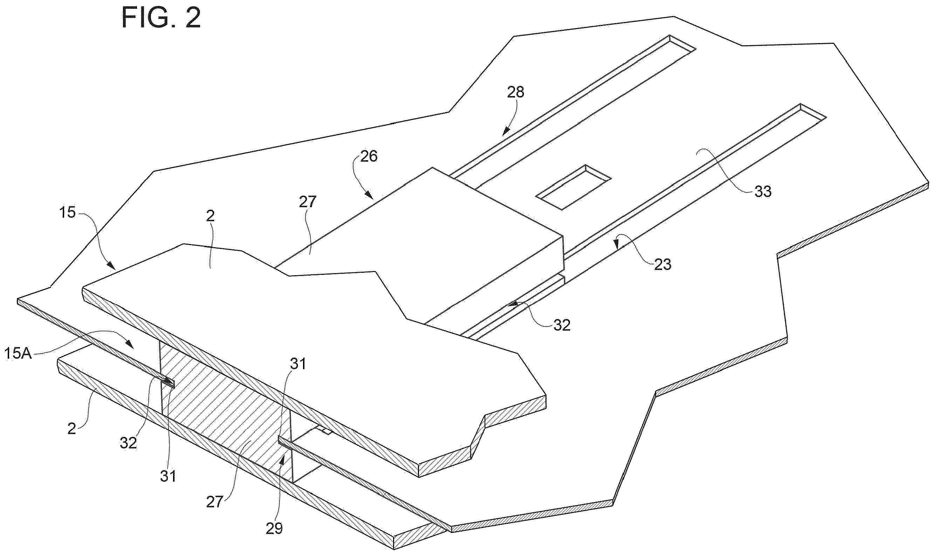

In the example described herein, each block 26 is coupled to the metal plate 15 by means of a releasable coupling device, indicated with 28 (figure 2). Each device 28 comprises a slide and drive assembly 29 comprising, in turn, a pair of appendixes 31, which are manufactured as one single piece together with the plate 15 and project towards one another inside the relative rectangular opening 23, and two counteracting grooves 32 obtained on the sides of the relative block 26. The appendixes 31 each engage a relative groove 32 in a sliding manner and the relative block 26 is axially stopped by an elastic appendix 33, which is also obtained as one single piece together with the plate 15, projects inside the relative opening 23 and forces the relative block 26 against the bottom of the relative opening 23. The devices 28 allow the blocks 26 to be quickly disassembled and replaced, if necessary, for example depending on the distribution of the gripping organs, with blocks with different shapes or dimensions or materials making up the blocks themselves. In particular, blocks with a different thickness are used to change the space between two consecutive glass sheets 2, which, for example, is required by the different stabilization treatments to which the glass sheets 2 can be subjected, especially the layered ones, after having been stacked in positions spaced apart by the spacers 3.

According to a variant which is not shown herein, the blocks 26 are firmly fixed to the metal plate 15 by means of rivets or screws or other equivalent connection means. Alternatively, furthermore, the blocks 26 are glued to the plate 15. In these last cases, the blocks 26 are common parallelepiped-shaped blocks without the grooves 32 and the metal plate 15 does not have all or part of the openings 23.

Owing to the above, it is evident that the special manufacturing features of the spacers and, in particular, the fact that they comprise a metal plate with a constant thickness, which is designed to be handled by means of the suction head used to move the glass sheets, allow manufacturers to significantly simplify known plants, reducing the dimensions and the manufacturing as well as functional costs thereof, since the apparatuses and the actuators dedicated to the sole gripping and moving of the spacers are eliminated. In other words, the suction gripping head, which is always present in sheet handling plants, is shared and still used in the same manner, regardless of whether it transfers glass sheets or spacers.

The increase in weight of the spacers described herein compared to traditional spacers is not a limit for a universal use thereof, since sheet gripping and moving assemblies are usually sized to move glass sheets that are much heavier than the ones of the spacers described herein.

The openings 18 allow air to freely flow through the compartments present between two consecutive glass sheets 2, thus allowing said glass sheets 2 to be subjected to any stabilization treatment, including autoclave treatments.

The solid portions 19 present between the different openings ensure a stable shape under stress conditions and, in use, allow the suction cups to be attached in distributed points so that the spacers 3 have a stable shape even during the handling.

As a consequence, the spacers 3 described herein can be moved along the same trajectories followed for the glass sheets 2 and after having distributed the suction gripping organs of the gripping head based on the type of sheet.

The spacers 3 described herein, unlike known spacers, can be stacked just like common glass sheets even in the gripping stations or in any point of the glass sheet feeding path and/or be moved by the glass sheet transferring/handling plants, since they can be compared to common glass sheets.

The quick coupling and removal of the blocks 26 to and from the metal plate 15 allows for an easy reconditioning of the spacers 3 in case they are worn out or, if necessary, a quick readjustment thereof in order to space apart different glass sheets or carry out a different treatment of the glass sheets.

Owing to the above, it is evident that the spacers 3 described above can be subjected to changes and variations. In particular, the openings 18 and 23 can be available in a different number and/or they can be distributed differently from what described and shown in the accompanying figures. Similarly, the blocks 26 can be coupled to the metal plate 15 in a different way from the one described herein and/or be made of a different material from the one indicated herein.

Moreover, the metal plate 15 can have outer dimensions that are much smaller than the ones of the glass sheets 2 and can be provided with stiffening ribs or bulges having a height that is smaller than the one of the blocks 26 so as not to interfere with the glass sheets 2.

## Claims

1. A handling unit (1) for glass sheets (2) and a spacer (3) designed to be interposed between a first and at least a second glass sheet (2); the unit (1) comprising a support plane (P) for the sheets (2) or the spacer (3), at least one glass sheets gripping or releasing station (4), and at least one spacer gripping or releasing station (6), arranged around said support plane (P); wherein said spacer is removable;
said handling unit and spacer being **characterized in that** said spacer (3) comprises a metal plate (15) and a plurality of spacer blocks (26) made of a material other than that of said metal plate (15), projecting in a cantilever fashion from opposite sides of said metal plate (15), **in that** said metal plate (15) has a plurality of through openings (23) and a plurality of solid portions (19) interleaved with said through openings (23), and **in that** said unit (1) comprises, furthermore, a single moving and gripping suction assembly (10,13) configured to couple itself regardlessly to said glass sheets (2) and to said solid portions (19) of said spacer (3) for moving said sheets (2) and said spacer (3) from or towards to said support plane (P).

2. The handling unit and spacer according to claim 1, **characterised in that** at least part of said spacer blocks (26) engages, at least partially, one of said through openings (23).

3. The handling unit and spacer according to claim 1 or 2, **characterised in that** at least part of said spacer blocks (26) is coupled to said plate through respective releasable connection means (28).

4. The handling unit and spacer according to claim 3, **characterised in that** said releasable connection means (28) are snap coupling means.

5. The handling unit and spacer according to claim 4, **characterised in that** said connection means (28) comprise, for at least part of said spacer blocks (26), respective slide and drive assemblies (29) and respective elastic retention appendixes (33); each of said retention appendixes (33) being defined by a relative portion of said plate and cooperating in abutment against the respective spacer block (26).

6. The handling unit and spacer according to claim 5, **characterised in that** each slide and drive assembly (29) comprises a pair of counteracting grooves (32) obtained on the sides of said spacer and engaged in a sliding manner by respective portions of said plate.

7. The handling unit and spacer according to any one of the previous claims, **characterised in that** said spacer blocks (26) are formed by blocks independent from one another.

8. The handling unit and spacer according to any one of the previous claims, **characterised in that** said spacer blocks (26) are made of elastomeric material, paper or polyurethane or composite.

9. The handling unit and spacer according to any one of the previous claims, **characterised in that** said metal plate (15) is produced in one single piece.

10. The handling unit and spacer according to any one of the previous claims, **characterised in that** said metal plate is defined by a metal sheet having a constant thickness.

11. A handling method for a removable spacer designed to be interposed between at least a first and at least a second glass sheet; the method comprising the steps of gripping said spacer by means of a gripping head and moving it from or towards one of said sheets, characterised that gripping and moving of said spacer are carried out by a handling unit and spacer as claimed in claim 1, and in that the single moving and gripping suction assembly (10,13) is the same single moving and gripping suction assembly (10;13) used for moving said glass sheets (2).

## Patentansprüche

1. Handhabungseinheit (1) für Glasscheiben (2) und ein Abstandshalter (3), der so ausgestaltet ist, dass er zwischen einer ersten und mindestens einer zweiten Glasscheibe (2) eingefügt ist; wobei die Einheit (1) eine Stützebene (P) für die Scheiben (2) oder den Abstandshalter (3), mindestens eine Glasscheibengreif- oder Glasscheibenlösestation (4), und mindestens eine Abstandshaltergreif- oder Abstandshalterlösestation (6) aufweist, die um die Stützebene (P) herum angeordnet sind; wobei der Abstandshalter entfernbar ist; wobei die Handhabungseinheit und der Abstandshalter **dadurch gekennzeichnet sind, dass** der Abstandshalter (3) eine Metallplatte (15) und eine Vielzahl von Abstandshalterblöcken (26) aufweist, die aus einem anderen Material als dem der Metallplatte (15) hergestellt sind und in einer freitragenden Weise von entgegengesetzten Seiten der Metallplatte (15) vorstehen, dass die Metallplatte (15) eine Vielzahl von Durchgangsöffnungen (23) und eine Vielzahl von festen Abschnitten (19) aufweist, die mit den Durchgangsöffnungen (23) verschachtelt sind, und dass die Einheit (1) ferner eine einzelne Bewegungs- und Greifsauganordnung (10, 13) aufweist, die dazu ausgebildet ist, sich unabhängig an die Glasscheiben (2) und die festen Abschnitte (19) des Abstandshalters (3) zu koppeln, um die Scheiben (2) und den Abstandshalter (3) von der Stützebene (P) weg oder zu ihr hin zu bewegen.

2. Handhabungseinheit und Abstandshalter nach Anspruch 1, **dadurch gekennzeichnet, dass** zumindest ein Teil der Abstandshalterblöcke (26) zumindest teilweise in eine der Durchgangsöffnungen (23) eingreift.

3. Handhabungseinheit und Abstandshalter nach Anspruch 1 oder 2, **dadurch gekennzeichnet, dass** zumindest ein Teil der Abstandshalterblöcke (26) mit der Platte durch entsprechende lösbare Verbindungsmittel (28) gekoppelt ist.

4. Handhabungseinheit und Abstandshalter nach Anspruch 3, **dadurch gekennzeichnet, dass** die lösbaren Verbindungsmittel (28) Schnappverbindungsmittel sind.

5. Handhabungseinheit und Abstandshalter nach Anspruch 4, **dadurch gekennzeichnet, dass** die Verbindungsmittel (28) für zumindest einen Teil der Abstandshalterblöcke (26) entsprechende Gleit- und Antriebsanordnungen (29) und entsprechende elastische Rückhaltefortsätze (33) aufweisen; wobei jeder der Rückhaltefortsätze (33) durch einen relativen Abschnitt der Platte definiert wird und an dem entsprechenden Abstandsblock (26) anliegend zusammenwirkt.

6. Handhabungseinheit und Abstandshalter nach Anspruch 5, **dadurch gekennzeichnet, dass** jede Gleit- und Antriebsanordnung (29) ein Paar von entgegenwirkenden Nuten (32) aufweist, die auf den Seiten des Abstandshalters erhalten werden und von entsprechenden Abschnitten der Platte gleitend in Eingriff genommen werden.

7. Handhabungseinheit und Abstandshalter nach einem der vorstehenden Ansprüche, **dadurch gekennzeichnet, dass** die Abstandshalterblöcke (26) durch Blöcke unabhängig voneinander gebildet werden.

8. Handhabungseinheit und Abstandshalter nach einem der vorstehenden Ansprüche, **dadurch gekennzeichnet, dass** die Abstandshalterblöcke (26) aus einem elastomeren Material, Papier oder Polyurethan oder Verbundmaterial hergestellt sind.

9. Handhabungseinheit und Abstandshalter nach einem der vorstehenden Ansprüche, **dadurch gekennzeichnet, dass** die Metallplatte (15) einstückig ausgebildet ist.

10. Handhabungseinheit und Abstandshalter nach einem der vorstehenden Ansprüche, **dadurch gekennzeichnet, dass** die Metallplatte durch ein Metallblech mit einer konstanten Dicke definiert wird.

11. Handhabungsverfahren für einen entfernbaren Abstandshalter, der so ausgestaltet ist, dass er zwischen mindestens einer ersten und mindestens einer zweiten Glasscheibe eingefügt ist; wobei das Verfahren die Schritte des Greifens des Abstandshalters mittels eines Greifkopfs und des Bewegens des Abstandshalters weg von oder zu einer der Scheiben umfasst, **dadurch gekennzeichnet, dass** das Greifen und Bewegen des Abstandshalters von einer Handhabungseinheit und einem Abstandshalter nach Anspruch 1 durchgeführt werden, und dass die einzelne Bewegungs- und Greifsauganordnung (10, 13) dieselbe einzelne Bewegungs- und Greifsauganordnung (10, 13) ist, die zur Bewegung der Glasscheibe (2) verwendet wird.

## Revendications

1. Unité de manutention (1) pour feuilles de verre (2) et un intercalaire (3) conçu pour être interposé entre une première et au moins une seconde feuille de verre (2) ; l'unité (1) comprenant un plan de support (P) pour les feuilles (2) ou l'intercalaire (3), au moins une station de saisie ou de libération de feuilles de verre (4), et au moins une station de saisie ou de libération d'intercalaire (6), agencée autour dudit plan de support (P) ; dans laquelle ledit intercalaire est amovible ;
ladite unité de manutention et intercalaire étant
**caractérisée en ce que** ledit intercalaire (3) comprend une plaque métallique (15) et une pluralité de blocs d'intercalaire (26) faits d'un matériau autre que celui de ladite plaque métallique (15), faisant saillie en porte-à-faux depuis les côtés opposés de ladite plaque métallique (15), **en ce que** ladite plaque métallique (15) a une pluralité d'ouvertures traversantes (23) et une pluralité de parties solides (19) intercalées avec lesdites ouvertures traversantes (23), et **en ce que** ladite unité (1) comprend, en outre, un ensemble unique de déplacement et de saisie par aspiration (10, 13) configuré pour se coupler indifféremment auxdites feuilles de verre (2) et auxdites parties solides (19) dudit intercalaire (3) pour déplacer lesdites feuilles (2) et ledit intercalaire (3) depuis ou vers ledit plan de support (P).

2. Unité de manutention et intercalaire selon la revendication 1, **caractérisée en ce qu'**au moins une partie desdits blocs d'intercalaire (26) s'engage, au moins partiellement, dans l'une desdites ouvertures traversantes (23).

3. Unité de manutention et intercalaire selon la revendication 1 ou 2, **caractérisée en ce qu'**au moins une partie desdits blocs d'intercalaire (26) est couplée à ladite plaque par l'intermédiaire de moyens de connexion amovibles respectifs (28).

4. Unité de manutention et intercalaire selon la revendication 3, **caractérisée en ce que** lesdits moyens de connexion amovibles (28) sont des moyens de couplage à encliquetage.

5. Unité de manutention et intercalaire selon la revendication 4, **caractérisée en ce que** lesdits moyens de connexion (28) comprennent, pour au moins une partie desdits blocs d'intercalaire (26), des ensembles respectifs de coulissement et d'entraînement (29) et des appendices de retenue élastiques respectifs (33) ; chacun desdits appendices de retenue (33) étant défini par une partie relative de ladite plaque et coopérant en butée contre le bloc d'intercalaire respectif (26).

6. Unité de manutention et intercalaire selon la revendication 5, **caractérisée en ce que** chaque ensemble de coulissement et d'entraînement (29) comprend une paire de rainures opposées (32) obtenues sur les côtés dudit intercalaire et engagées de manière coulissante par des parties respectives de ladite plaque.

7. Unité de manutention et intercalaire selon l'une quelconque des revendications précédentes, **caractérisée en ce que** lesdits blocs d'intercalaire (26) sont formés par des blocs indépendants les uns des autres.

8. Unité de manutention et intercalaire selon l'une quelconque des revendications précédentes, **caractérisée en ce que** lesdits blocs d'intercalaire (26) sont réalisés en matériau élastomère, papier ou polyuréthane ou composite.

9. Unité de manutention et intercalaire selon l'une quelconque des revendications précédentes, **caractérisée en ce que** ladite plaque métallique (15) est réalisée en une seule pièce.

10. Unité de manutention et intercalaire selon l'une quelconque des revendications précédentes, **caractérisée en ce que** ladite plaque métallique est définie par une feuille de métal ayant une épaisseur constante.

11. Procédé de manutention d'un intercalaire amovible conçu pour être interposé entre au moins une première et au moins une seconde feuille de verre ; le procédé comprenant les étapes consistant à saisir ledit intercalaire au moyen d'une tête de saisie et à le déplacer depuis ou vers l'une desdites feuilles, **caractérisé en ce que** la saisie et le déplacement dudit intercalaire sont effectués par une unité de manutention et intercalaire selon la revendication 1, et **en ce que** l'ensemble unique de déplacement et de saisie par aspiration (10, 13) est le même ensemble unique de déplacement et de saisie par aspiration (10, 13) utilisé pour déplacer lesdites feuilles de verre (2).
